# EUROPÄISCHE PATENTANMELDUNG

(11) **EP 0 993 799 A1**
(43) Veröffentlichungstag der Anmeldung: **19.04.2000**
(21) Anmeldenummer: 99118217.1
(22) Anmeldetag: 14.09.1999
(51) Int. Cl.: A47J 31/08

(54) **Filterpapiereinsatz zur Herstellung von Aromauszügen aus Kaffee oder Tee**

(30) Priorität: 17.10.1998 DE 29818568 U
(71) Anmelder: MELITTA HAUSHALTSPRODUKTE GmbH & Co. Kommanditgesellschaft, D-32427 Minden (DE)
(72) Erfinder: Dölfel, Rainer, Dr., 32457 Porta Westfalica (DE)
(74) Vertreter: Stracke, Alexander, Dipl.-Ing.

(57) **Zusammenfassung**

Es wird ein Filterpapiereinsatz (1) beschrieben, der aus einem faserigen Material hergestellt und zur Herstellung von Aromaauszügen aus Kaffee oder Tee bestimmt ist. Die nutzbare Filterfläche des Filterpapiereinsatzes (1) ist ganz oder bereichsweise mit Poren (2) zur Verbesserung der Durchlässigkeit für Aroma tragende Kolloidalteilchen versehen.

Erfindungsgemäß sind die Poren (2) durch Deformation des Filterpapieres (3) etwa lotrecht zur Filterpapieroberfläche gebildet, und zwar derart, daß die Ebenen (7) der Poren (2) etwa rechtwinklig zur Filterpapieroberfläche verlaufen.

Das Einbringen der Poren (2) ist technisch besonders einfach, zuverlässig und weitestgehend störungsfrei möglich. Es werden zur Anbringung der Poren (2) lediglich zwei Walzen benötigt, von denen eine entsprechende Vorsprünge aufweist und die andere mit einer elastischen Oberfläche versehen ist.

Es kann auch ein Walzenpaar nach dem System 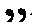 Patrize/Matrize" zum Einsatz kommen.

## Beschreibung

Die vorliegende Erfindung betrifft einen aus einem faserigen Material hergestellten Filterpapiereinsatz zur Herstellung von Aromaauszügen aus Kaffee oder Tee, wobei die nutzbare Filterfläche ganz oder bereichsweise mit Poren zur Verbesserung der Durchlässigkeit für Aroma tragende Kolloidalteilchen versehen ist.

Filterpapiereinsätze der gattungsgemäßen Art sind an sich bekannt.

Der vorliegenden Erfindung liegt die Aufgabe zugrunde, einen Filterpapiereinsatz der gattungsgemäßen Art zu schaffen, der preiswert herstellbar ist und im Porenbereich einerseits die gewünschte Durchlässigkeit für Aroma tragende Kolloidalteilchen aufweist und andererseits den unerwünschten Durchlaß von Feststoffpartikeln wirksam verhindert.

Diese Aufgabe wird erfindungsgemäß dadurch gelöst, daß die Poren durch Deformationen des Filterpapieres etwa lotrecht zur Filterpapieroberfläche gebildet sind derart, daß die Ebenen der Poren etwa rechtwinklig zur Filterpapieroberfläche verlaufen.

Der erfindungsgemäße Filterpapiereinsatz weist eine Vielzahl von Vorteilen auf.

So ist einerseits das Einbringen der Poren technisch besonders einfach, zuverlässig und weitestgehend störungsfrei möglich. Es werden zur Anbringung der Poren lediglich zwei Walzen benötigt, von denen eine mit höckerartigen oder gaubenartigen Vorsprüngen und die andere mit einer elastischen Oberfläche versehen ist, durch die das Filterpapier dann hindurchgeführt wird. Durch die Vorsprünge der einen Walze wird das Filterpapier im Bereich dieser Vorsprünge entsprechend deformiert und so weit gedehnt oder überdehnt, daß etwa rechtwinklig zur Filterpapieroberfläche verlaufende Poren entstehen. Ein Verschleiß der mit den Vorsprüngen versehenen Walze ist aufgrund der elastischen Struktur der Oberfläche der Gegenwalze nicht zu befürchten.

Es kann auch ein Walzenpaar nach dem System 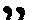 Patrize/Matrize" zum Einsatz kommen.

Die Poren können im Durchlaufverfahren durch die Walzen erzeugt werden, so daß eine Verlangsamung des Fertigungsprozesses eines Filterpapiereinsatzes insgesamt nicht in Kauf genommen werden muß.

Die Deformation des Filterpapieres etwa lotrecht zur Filterpapieroberfläche und die damit einhergehende Dehnung bzw. Überdehnung bewirkt eine Dichteverringerung des Filterpapieres, insbesondere im gedehnten bzw. überdehnten Bereich senkrecht zur Oberfläche bis zur Rißbildung. Somit kann durch das Maß der Deformation Einfluß genommen werden auf die Dichteveränderung des Filterpapieres im Bereich der zu erzeugenden Poren. Selbst dann, wenn eine Überdehnung bis zur Rißbildung erfolgt, sind die Ränder der Poren extrem faserig begrenzt, so daß gute Rückhalteeigenschaften für Feststoffpartikel gewährleistet sind.

Durch das Maß der Deformation des Filterpapieres und die damit verbundene Verringerung der Dichte des Filterpapieres bis zur möglichen Rißbildung kann die gewünschte Durchlässigkeit für Aroma fragende Kolloidalteilchen praktisch beliebig eingestellt werden.

So können die Poren durch eine Deformation des Filterpapieres bis zu einer Restdichte im unmittelbaren Porenbereich auf etwa 10-70 % der Dichte des nicht deformierten Filterpapieres gebildet sein.

Bevorzugt ist dabei eine Deformation bis zu einer Restdichte von etwa 10-30 % der Dichte des nicht deformierten Filterpapieres.

Wird eine größere Durchlässigkeit für Aroma tragende Kolloidalteilchen gewünscht, können die Poren durch eine Deformation des Filterpapieres bis zur Rißbildung gebildet sein.

In diesem Falls ist bevorzugt, daß die Poren eine mittlere Porenweite von etwa 0,1-0,7 mm - gemessen bei einer Halbwerts-Faserdichte, die etwa 50 % der Faserdichte des usprünglichen Materials beträgt, aufweisen.

Die Halbwerts-Faserdichte ist die Dichte im Papier, welche der Hälfte der ursprünglichen Papierdichte in Zonen ohne erfindungsgemäße Poren entspricht.

Weitere Merkmale der Erfindung sind Gegenstand weiterer Unteransprüche.

Ausführungsbeispiele der Erfindung sind in den beigefügten Zeichnungen dargestellt und werden im folgenden näher beschrieben.

Es zeigen:
- Figur 1: eine Ansicht eines erfindungsgemäßen, kegelstumpfartigen Filterpapiereinsatzes,
- Figur 2: eine stark schematisierte Darstellung einer Vorrichtung zur Erzeugung von Poren in einem Filterpapier,
- Figur 3: eine stark vergrößerte Draufsicht auf den Bereich einer Pore des Filterpapiereinsatzes gemäß Figur 1,
- Figur 4: eine perspektivische Darstellung des Porenbereiches gemäß Figur 3,
- Fig. 5-7: stark schematisiert dargestellte Querschnittsformen von Poren eines Filterpapiereinsatzes.

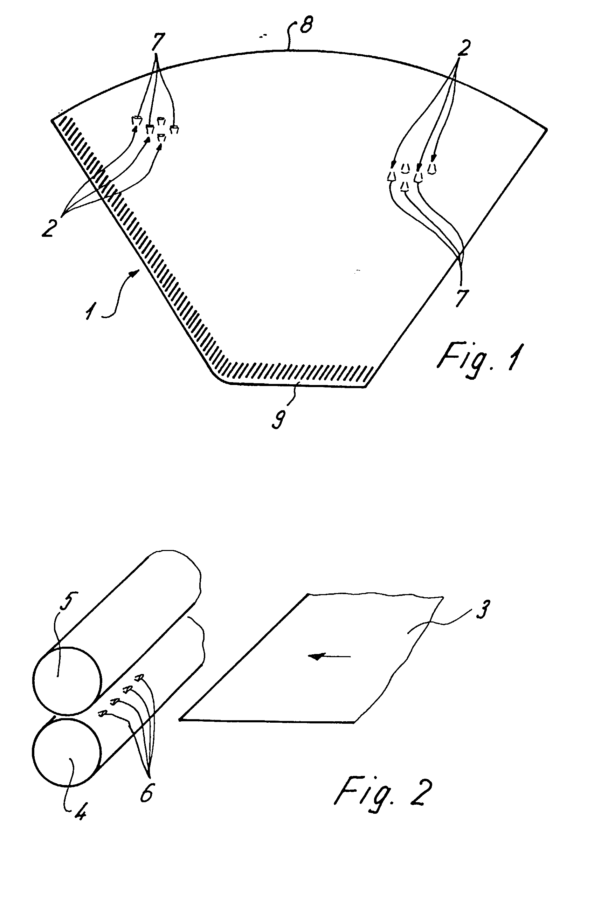

In Figur 1 ist mit dem Bezugszeichen 1 insgesamt ein Filterpapiereinsatz gezeichnet, der aus einem faserigen Material hergestellt und zur Herstellung von Aromaauszügen aus Kaffee oder Tee bestimmt ist. Dabei ist die nutzbare Filterfläche des Filterpapiereinsatzes 1 in an sich bekannter Weise ganz oder bereichsweise mit Poren 2 zur Verbesserung der Durchlässigkeit für Aroma fragende Kolloidarteilchen versehen..

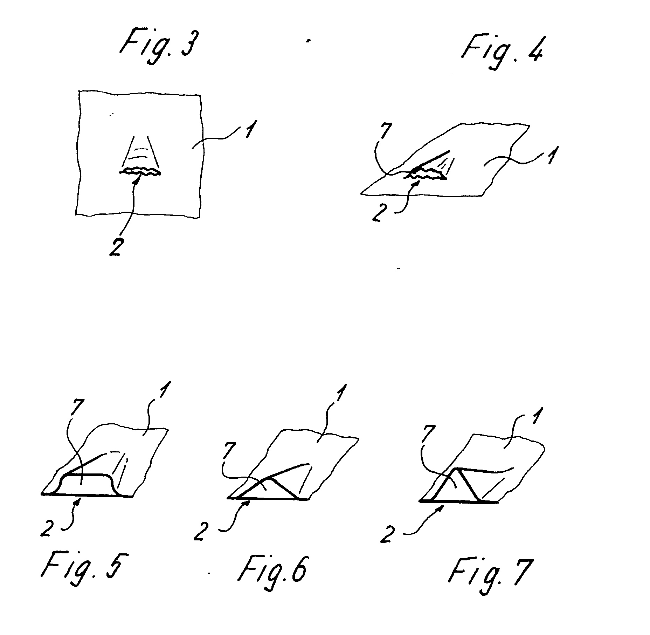

Mögliche Gestaltungsformen der Poren 2 sind beispielhaft in den Figuren 3-7 gezeigt. Auf diese Porenformen wird im folgenden noch näher eingegangen.

Die Figur 2 zeigt in schematischer Darstellung eine Möglichkeit, die besagten Poren 2 in ein Filterpapier 3 einzubringen.

Diese Vorrichtung umfaßt zwei Walzen 4 und 5, durch die ein mit Poren 2 zu versehenes Filterpapier 3 hindurchgeführt wird.

Die mit dem Bezugszeichen 4 versehene Walze ist zumindest im Oberflächenbereich aus Metall hergestellt und mit einer Vielzahl von Vorsprüngen 6 versehen. Diese Vorsprünge 6 entsprechen der noch zu beschreibenden Form der zu erzeugenden Poren 2.

Die Gegenwalze 5 ist mit einer elastischen Oberfläche ausgestattet, so daß durch die Vorsprünge 6 das durchlaufende Filterpapier 3 in Richtung der Gegenwalze 5 deformiert und gedehnt bzw. überdehnt werden kann.

Je nach Größe der Vorsprünge 6 kann es auch zu einer Rißbildung des Filterpapieres 3 kommen.

Durch diese Vorrichtung können Poren 2 erzeugt werden, wie sie im Detail in den Figuren 3-7 gezeigt sind. Es ist aus diesen Figuren deutlich erkennbar, daß die Poren 2 durch eine Deformation des Filterpapieres etwa lotrecht zur Filterpapieroberfläche erzeugt sind. Durch höcker- oder gaubenartige Vorsprünge 6 auf der mit dem Bezugszeichen 4 versehenen Walze können dabei Poren 2 mit etwa bogenförmigen, trapezartigen, dreieckigen oder ähnlichen Querschnitten erzeugt werden.

Die wirksamen Ebenen 7 der Poren 2 verlaufen dabei etwa rechtwinklig zur Filterpapieroberfläche.

Je nach Größe der die Poren 2 erzeugenden Vorsprünge 6 können die Poren 2 im Bereich ihrer wirksamen Ebenen 7 so weit gedehnt werden, daß dort nur noch eine Restdichte von etwa 10-70 % - bevorzugt 10-30 % - der Dichte des nicht deformierten Filterpapieres 3 vorhanden ist. Ebenso ist es denkbar, die Poren 2 durch eine Deformation des Filterpapieres 3 bis zur Rißbildung herzustellen, wobei dann die wirksamen Ebenen 7 der Poren bevorzugt eine mittlere Porenweite von etwa 0,1-0,7 mm ― gemessen bei einer Halbwärts-Faserdichte, die etwa 50 % der Faserdichte des ursprünglichen Materiales trägt, aufweisen.

Das Filterpapier 3 kann nach dem Durchlauf durch die Vorrichtung zur Erzeugung der Poren 2 durch den Durchlauf durch zwei glatte Walzen wieder geglättet werden, so daß ein fertiger Filterpapiereinsatz 1 keine größere Dicke aufweist als ein Filterpapiereinsatz ohne die in der vorbeschriebenen Weise erzeugten Poren. Bei Benutzung eines mit Poren 2 versehenen Filterpapiereinsatzes 1 werden durch den Innendruck die Poren wieder mehr oder weniger weit geöffnet, so daß die geschwächten oder bis zur Rißbildung überdehnten wirksamen Ebenen 7 der Poren 2 wieder über die Filterpapieroberfläche hinaus vorstehen, so daß in erwünschter Weise Aroma tragende Kolloidalteilchen den Filterpapiereinsatz besser durchtreten können, gleichzeitig werden aber in jedem Falle Feststoffpartikel wirksam zurückgehalten. Dies gilt auch dann, wenn die Poren 2 bis zur Rißbildung geöffnet sind, da der Randbereich der überdehnten Porenabschnitte sehr stark faserig begrenzt ist, so daß trotz der Durchlässigkeit Aroma tragender Kolloidalteilchen Feststoffpartikel nicht durch diese Porenebenen durchtreten können.

Die wirksamen Ebenen 7 der Poren 2 können, was in Figur 1 angedeutet ist, zur Oberseite 8 des Filterpapiereinsatzes 1 weisen, falls dies gewünscht ist, können die wirksamen Porenebenen 7 aber auch in Richtung der Bodennaht und damit der Unterseite des Filterpapiereinsatzes 1 weisen.

Bevorzugt ist eine Anordnung der Porenebenen 7 in Richtung der Oberseite 8 des Filterpapiereinsatzes 1, da hierdurch die Rückhaltung von Feststoffpartikeln zusätzlich verbessert wird.

## Patentansprüche

1. Aus einem faserigen Material hergestellter Filterpapiereinsatz zur Herstellung von Aromaauszügen aus Kaffee oder Tee, wobei die nutzbare Filterfläche ganz oder bereichsweise mit Poren zur Verbesserung der Durchlässigkeit für Aroma tragende Kolloidalteilchen versehen ist, **dadurch gekennzeichnet**, daß die Poren (2) durch Deformation des Filterpapieres (3) etwa lotrecht zur Filterpapieroberfläche gebildet sind derart, daß die Ebenen (7) der Poren (2) etwa rechtwinklig zur Filterpapieroberfläche verlaufen.

2. Filterpapiereinsatz nach Anspruch 1, **dadurch gekennzeichnet**, daß die Poren (2) durch eine Deformation des Filterpapieres (3) bis zu einer Restdichte im unmittelbaren Porenbereich auf etwa 10-30 % der Dichte des nicht deformierten Filterpapieres (3) gebildet sind.

3. Filterpapiereinsatz nach Anspruch 1, **dadurch gekennzeichnet**, daß die Poren (2) durch eine Deformation des Filterpapieres (3) bis zur Rißbildung gebildet sind..

4. Filterpapiereinsatz nach Anspruch 3, **dadurch gekennzeichnet**, daß die Poren (2) eine mittlere Porenweite von etwa 0,1-0,7 mm ― gemessen bei einer Halbwerts-Faserdichte, die etwa 50 % der Faserdichte des ursprünglichen Materials beträgt ― aufweisen.

5. Filterpapiereinsatz nach einem oder mehreren der vorhergehenden Ansprüche, **dadurch gekennzeichnet,** daß die Poren eine höckerartige oder gaubenartige Form aufweisen, wobei der Querschnitt bogenförmig, trapezförmig, dreieckförmig oder dergleichen ausgebildet ist.

6. Filterpäpiereinsatz nach einem oder mehreren der vorhergehenden Ansprüche, **dadurch gekennzeichnet**, daß die wirksamen Ebenen (7) der Poren (2) in Richtung der Oberkante (8) des Filterpapiereinsatzes (1) weisen.

7. Filterpapiereinsatz nach einem oder mehreren der Ansprüche 1-5, **dadurch gekennzeichnet**, daß die wirksamen Ebenen (7) der Poren (2) in Richtung der Naht (9) bzw. der Unterseite des Filterpapiereinsatzes (1) weisen.

8. Filterpapiereinsatz nach einem oder mehreren der vorhergehenden Ansprüche, **dadurch gekennzeichnet**, daß das Filterpapier (3) nach Erzeugung der Poren (2), aber vor der Bildung eines Filterpapiereinsatzes (1) geglättet ist.
